# EUROPÄISCHE PATENTSCHRIFT

(11) **EP 1 301 082 B1**
(45) Veröffentlichungstag und Bekanntmachung des Hinweises auf die Patenterteilung: **03.03.2004**
(21) Anmeldenummer: 01954017.8
(22) Anmeldetag: 06.07.2001
(51) Int. Cl.: A21D 15/02, A21D 15/00, A23L 3/3418

(54) **VERFAHREN ZUM HALTBARMACHEN GESCHLAGENE SAHNE ENTHALTENDER KUCHEN ODER TORTEN**
METHOD FOR PRESERVING CAKES OR TARTS CONTAINING WHIPPED CREAM
PROCEDE POUR CONSERVER DES GATEAUX ET DES TARTES CONTENANT DE LA CREME FOUETTEE

(30) Priorität: 07.07.2000 DE 10032618
(43) Veröffentlichungstag der Anmeldung: 16.04.2003
(73) Patentinhaber: Bauer, Gerhard, 72297 Seewald-Allmandle (DE)
(72) Erfinder: Bauer, Gerhard, 72297 Seewald-Allmandle (DE)
(74) Vertreter: Twelmeier, Ulrich, Dipl.Phys.
(86) Internationale Anmeldenummer: PCT/EP2001/007770
(87) Internationale Veröffentlichungsnummer: WO 2002/003806

(56) Entgegenhaltungen:
- EP-A- 0 666 028
- DE-A- 3 140 337
- DE-C- 19 708 752
- US-A- 3 537 866
- US-A- 3 765 188
- US-A- 4 451 492
- ANON.: "Freshness prolonged by rapid cooling , shock freezing and CO2-protective packs" NEUE VERPACKUNG, Bd. 35, Nr. 10, 1982, Seiten 1261-1262, XP001024795
- PATENT ABSTRACTS OF JAPAN vol. 007, no. 056 (C-155), 8. März 1983 (1983-03-08) & JP 57 206352 A (YUKIJIRUSHI NIYUUGIYOU KK), 17. Dezember 1982 (1982-12-17)
- FRITCH C. : "Freezing bakery products with liquid nitrogen" BAKERS' DIGEST, Bd. 45, Nr. 5, 1971, Seiten 61-62,75, XP001024794

## Beschreibung

Die Erfindung betrifft ein Verfahren zum Haltbarmachen von Konditoreierzeugnissen, welche geschlagene Sahne enthalten, insbesondere Sahnetorten.

Bekannt ist es, Kuchen und Torten, welche geschlagene Sahne enthalten, durch Tiefkühlen haltbar zu machen. Nachteilig hierbei sind die hohen Kosten, welche eine ununterbrochene Tiefkühlung mit sich bringt, sowie der Zeitaufwand beim Auftauen.

'Neme Verpackung' 1982 vol 35 Seiten 1261-1262, offenbart ein Verfahren zum Haltbarmachen von hebensmittel welche unter Verwendung von geschlagener Sahne hergestellt sind.

Bekannt ist es auch, Lebensmittel dadurch haltbar zu machen, daß sie unter einem Schutzgas in einem luftdichten Behälter verpackt werden. Will man Kuchen und Torten, welche geschlagene Sahne enthalten, unter Schutzgas setzen, so stellt sich das Problem, daß beim Gasaustausch der Luft gegen ein Schutzgas die geschlagene Sahne in sich zusammenfällt.

Ferner ist es bekannt, Sahne durch ein Schutzgas aufzuschäumen. Das ist für Sahnehäubchen praktikabel, welche auf eine Süßspeise gesetzt werden, führt aber beim Herstellen z.B von geschichteten Sahnetorten nicht zum Ziel Ziel der Erfindung ist es somit, Konditoreierzeugnisse, welche geschlagene Sahne insbesondere in Schichten enthalten, ohne den Aufwand und die Kosten einer ständigen Tiefkühlung haltbar zu machen.

Diese Aufgabe wird von einem Verfahren mit den Merkmalen des Anspruchs 1 gelöst. Vorteilhafte Weiterbildungen der Erfindung sind Gegenstand der Unteransprüche.

Das Verfahren sieht vor, daß geschlagene Sahne enthaltende Konditoreierzeugnisse, insbesondere Kuchen und Torten, in einen Behälter eingebracht, eingefroren, die Luft durch Gasaustausch durch ein Schutzgas ersetzt und anschließend der Behälter luftdicht verschlossen wird, wobei die Reihenfolge des Einbringens und Einfrierens vertauscht werden kann. Vorzugsweise wird das Konditoreierzeugnis aber zuerst in den Behälter eingebracht und danach eingefroren, da dies das Verfahren vereinfacht und kostengünstiger ist als die andere Reihenfolge.

Das Einfrieren ermöglicht es, die Luft gegen ein Schutzgas auszutauschen, ohne daß die geschlagene Sahne in sich zusammenfällt, weil sie zuvor durch das Einfrieren in ihrer Schaumform stabilisiert wird. Insoweit hat das erfindungsgemäße Einfrieren nicht den Zweck, durch das Absenken der Temperatur die Haltbarkeit herbeizuführen, vielmehr wird das Einfrieren als Mittel eingesetzt, um in der Schlagsahne einen Gasaustausch von Luft zu einem Schutzgas vornehmen zu können, ohne daß die Schlagsahne dabei zusammenfällt. Deshalb setzt die Erfindung auch keineswegs voraus, daß die Konditoreierzeugnisse auf die für Tiefkühlkost gebräuchliche Temperatur von -18°C bis -22°C gebracht werden. Vielmehr kann man das Produkt nach dem Gasaustausch und nach dem Verschließen des Behälters auch wieder auftauen lassen und tut das vorzugsweise auch, weil die Kuchen und Torten sich dann als am appetitlichsten erweisen.

Vorzugsweise wird die Temperatur des Konditoreierzeugnisses bei dem Verfahren nur soweit abgesenkt, wie es unbedingt nötig ist, um die geschlagene Sahne durch das Einfrieren mechanisch so weit zu stabilisieren, daß sie beim Gasaustausch nicht zusammenfällt . Daher kann das Einfrieren bereits bei etwa -10°C bis -16°C durchgeführt werden. Vorzugsweise wird das Einfrieren bei -12°C bis -15°C durchgeführt. Mit einer solchen Temperatur können die Behälter mit dem gefrorenen Konditoreierzeugnis, insbesondere mit dem gefrorenen Kuchen oder mit der gefrorenen Torte aus einer Gefrierkammer in eine Gasaustauschkammer überführt werden. Es ist aber ebenfalls möglich, den Gasaustausch in der Gefrierkammer selbst vorzunehmen, wobei die zuerst genannte Möglichkeit die rationellere und preiswertere ist.

Tiefer zu kühlen, als oben angegeben, würde, solange es nur darum geht, den Gasaustausch auch in der Schlagsahne durchführen zu können, nur unnötig Energie kosten.

Nach erfolgtem Gasaustausch können die Konditoreierzeugnisse, insbesondere Kuchen oder Torten, entweder zur längeren Lagerung auf die für Tiefkühlkost übliche Lagertemperatur von -18°C bis -22°C abgekühlt werden oder aber auf Raum- oder Kühlschranktemperatur (ca. 2°C bis 8°C) erwärmt werden, bei welcher die Sahnetörtchen typisch ca. zwei Wochen haltbar sind. Wenn sie tiefgefroren waren, sind sie nach dem Auftauen ebenfalls noch ca. zwei Wochen unter dem eingefüllten Schutzgas haltbar.
Die Konditoreierzeugnisse, insbesondere Kuchen und Torten, kommen wie frisch hergestellt aus dem Behälter, insbesondere dann, wenn sie nicht tiefgefroren wurden.

Der Gasaustausch erfolgt durch Absaugen der Luft und Fluten mit Schutzgas, da dies eine schnelle Durchführung des Verfahrens erlaubt.

Das Schutzgas sollte möglichst keinen Sauerstoff enthalten, inert sein und insbesondere nicht sauer sein, um einen Verderb durch Mikroorganismen und ein Gerinnen der Sahne zu verhindern.

Vorzugsweise wird als Schutzgas aus Stickstoff verwendet, es eignet sich für diesen Zweck gut und ist preiswert erhältlich.

Die Verwendung des Verfahrens ermöglicht es nun, sogar geschichtete Sahnetorten, insbesondere Schwarzwälder Kirschtorten und dergleichen geschichtete Sahnetorten, im Handel und in Cafés und anderen Gaststätten ungekühlt, mäßig gekühlt in Kühlregalen oder tiefgefroren in Gefriertruhen oder Gefrierschränken vorrätig zu halten. Ein besonderer Vorteil liegt darin, daß sogar mittelgroße Bäkker- und Konditorbetriebe mit Schlagsahne herzustellende Kuchen und Torten für den Eigenbedarf oder auch für den Vertrieb an Cafés und Gaststätten haltbar herstellen können, ohne eine lückenlose Kühl- oder Gefrierkette bereitstellen zu müssen. Einen besonderen Vorteil hat die Erfindung für Gaststätten und Cafés, welche z. B. vor einem Wochenende, an welchem sie starken Ausflugsverkehr erwarten, ungekühlte oder aufgetaute Torten und Kuchen benötigen, bisher aber auf diesen sitzen bleiben und sie vernichten müssen, wenn durch einen Wetterumschwung die Ausflugsgäste ausbleiben. Erfindungsgemäß haltbar gemachte Kuchen und Torten können ungeöffnet immer noch für ca. weitere zwei Wochen ohne besondere Kühlung gelagert werden. Die Kuchen und Torten müssen deshalb im Café oder in der Gaststätte erst unmittelbar vor dem Verzehr aus dem versiegelten Behälter entnommen werden und sind dann appetitlich frisch. Nicht verbrauchte Torten können ohne weiteres gelagert und Tage später in appetitlichem Zustand zum Verzehr angeboten werden. Für die Betreiber von Cafés und Gaststätten ist das ein enormer Kostenvorteil.

Das Verfahren läßt sich mit Vorteil auch auf das Haltbarmachen von anderen Lebensmitteln, welche geschlagene Sahne enthalten, übertragen, z. B. auf Süßspeisen.

## Patentansprüche

1. Verfahren zum Haltbarmachen von Konditoreierzeugnissen, welche unter Verwendung von geschlagener Sahne hergestellt sind, insbesondere eines Kuchens oder einer Torte, **dadurch gekennzeichnet, daß** das Konditoreierzeugnis in einen Behälter eingebracht, eingefroren, die im Behälter und in der geschlagenen Sahne enthaltene Luft durch Gasaustausch, welcher durch Absaugen der Luft und anschließendes Fluten mit Schutzgas erfolgt, durch ein Schutzgas ersetzt und anschließend der Behälter luftdicht verschlossen wird, wobei die Reihenfolge des Einbringens in den Behälter und des Einfrierens vertauscht werden kann.

2. Verfahren nach Anspruch 1, **dadurch gekennzeichnet, daß** die Temperatur des Konditoreierzeugnisses beim Einfrieren nur soweit abgesenkt wird, wie es nötig ist, um ein Zusammenfallen der geschlagenen Sahne beim Absaugen von Luft zu verhindern.

3. Verfahren nach Anspruch 1 oder 2, **dadurch gekennzeichnet, daß** das Konditoreierzeugnis auf eine Temperatur von -10°C bis -16°C gefroren wird.

4. Verfahren nach Anspruch 1 oder 2, **dadurch gekennzeichnet, daß** das Konditoreierzeugnis auf eine Temperatur von -12°C bis -15°C gefroren wird.

5. Verfahren nach einem der vorstehenden Ansprüche, **dadurch gekennzeichnet, daß** als Schutzgas Stickstoff verwendet wird.

6. Verfahren nach einem der vorstehenden Ansprüche, **dadurch gekennzeichnet, daß** die Konditoreierzeugnisse in Ihren Behältern nach dem Einfrieren in einer Gefrierkammer aus dieser in eine davon getrennte, nicht notwendigerweise aber vorzugsweise gekühlte, Gasaustauschkammer überführt werden, in welcher der Gastaustausch und danach das Verschließen der Behälter durchgeführt werden.

7. Verfahren nach einem der Ansprüche 1 bis 5, **dadurch gekennzeichnet, daß** das gesamte Verfahren in ein- und derselben Kammer durchgeführt wird.

8. Verfahren nach einem der vorstehenden Ansprüche, **dadurch gekennzeichnet, daß** man das Konditoreierzeugnis nach dem Verschließen des Behälters auftauen läßt.

9. Verfahren nach einem der Ansprüche 1 bis 7, **dadurch gekennzeichnet, daß** die Temperatur nach dem Verschließen des Behälters auf einen zur Lagerung von Tiefkühlkost gebräuchlichen Wert, insbesondere auf -18°C bis -22°C abgesenkt wird.

10. Verwendung des Verfahrens nach einem der vorstehenden Ansprüche für geschichtete Sahnetorten, insbesondere Schwarzwälder Kirschtorten.

11. Verwendung des Verfahrens nach einem der Ansprüche 1 bis 9 für andere mit geschlagener Sahne hergestellte Lebensmittel als Konditoreierzeugnisse.

## Claims

1. Method for preserving confectionery products, that have been produced using whipped cream, especially a cake or a tart, **characterised in that** the confectionery product is placed in a container and is frozen, that the air, which is contained in the container and in the whipped cream, is exchanged against a protective gas by a gas exchange process, which is effected by sucking off the air followed by flooding with a protective gas, and that thereafter the container is closed air-tight, the order of the steps of placing the product in the container and freezing it being exchangeable.

2. The method as defined in Claim 1, **characterised in that** the temperature of the confectionery product is lowered during the freezing process only to such an extent as required to prevent the whipped cream from collapsing when sucking off the air.

3. The method as defined in Claim 1 or Claim 2, **characterised in that** the confectionery product is frozen to a temperature of -10°C to -16°C.

4. The method as defined in Claim 1 or Claim 2, **characterised in that** the confectionery product is frozen to a temperature of -12°C to -15°C.

5. The method as defined in any of the preceding claims, **characterised in that** the protective gas used is nitrogen.

6. The method as defined in any of the preceding claims, **characterised in that** after freezing in a freezing chamber, the confectionery products, contained in their containers, are transferred from the freezing chamber into a separate, not necessarily but preferably chilled gas exchange chamber; where the gas exchange and thereafter the closing of the containers is carried out.

7. The method as defined in any of Claims 1 to 5, **characterised in that** the entire process is carried out in one and the same chamber.

8. The method as defined in any of the preceding claims, **characterised in that** the confectionery product is allowed to become thawed after closing of the container.

9. The method as defined in Claims 1 to 7, **characterised in that** after closing of the container the temperature is lowered to a value usual for storing deep-frozen food, especially to a value of -18°C to -22°C.

10. Using the method as defined in any of the preceding claims for preserving layered cream-tarts, especially Black Forest Gateaus.

11. Using the method as defined in any of Claims 1 to 9 for preserving food other than confectionery products that is produced using whipped cream.

## Revendications

1. Procédé pour la conservation d'articles de pâtisserie que l'on prépare en utilisant de la crème fouettée, en particulier d'une tarte ou d'un gâteau, **caractérisé en ce qu'**on introduit l'article de pâtisserie dans un récipient, on le congèle, on remplace par un gaz de protection l'air contenu dans le récipient et dans la crème fouettée, via un échange gazeux que l'on met en oeuvre par aspiration de l'air et par injection ultérieure du gaz de protection, et on referme ensuite le récipient pour le rendre étanche à l'air, l'ordre concernant l'introduction dans le récipient et la congélation pouvant être échangé.

2. Procédé selon la revendication 1, **caractérisé en ce qu'**on n'abaisse la température de l'article de pâtisserie lors de la congélation qu'à concurrence de ce qui est nécessaire afin d'éviter une retombée de la crème fouettée lors de l'aspiration de l'air.

3. Procédé selon la revendication 1 ou 2, **caractérisé en ce qu'**on soumet l'article de pâtisserie à une congélation à une température de -10 °C à -16 °C.

4. Procédé selon la revendication 1 ou 2, **caractérisé en ce qu'**on soumet l'article de pâtisserie à une congélation à une température de -12 °C à -15 °C.

5. Procédé selon l'une quelconque des revendications précédentes, **caractérisé en ce qu'**on utilise de l'azote à titre de gaz de protection.

6. Procédé selon l'une quelconque des revendications précédentes, **caractérisé en ce qu'**on transfère les articles de pâtisserie dans leurs récipients, après avoir procédé à la congélation dans une chambre de congélation, hors de cette dernière dans une chambre d'échange gazeux qui en est séparée, refroidie, non pas de manière nécessaire, mais de manière préférable, dans laquelle on procède à l'échange gazeux avant de refermer le récipient.

7. Procédé selon l'une quelconque des revendications 1 à 5, **caractérisé en ce qu'**on effectue le procédé dans son ensemble dans une seule et même chambre.

8. Procédé selon l'une quelconque des revendications précédentes, **caractérisé en ce qu'**on laisse l'article de pâtisserie se décongeler après la fermeture du récipient.

9. Procédé selon l'une quelconque des revendications 1 à 7, **caractérisé en ce qu'**on abaisse la température, après la fermeture du récipient, jusqu'à une valeur habituelle pour l'entreposage de denrées congelées, en particulier à une température de -18 °C à -22 °C.

10. Utilisation du procédé selon l'une quelconque des revendications précédentes pour des gâteaux à la crème disposés en couches, en particulier pour des gâteaux forêt-noire.

11. Utilisation du procédé selon l'une quelconque des revendications 1 à 9 pour d'autres aliments préparés avec de la crème fouettée, à titre d'articles de pâtisserie.
